(19) **Europäisches Patentamt / European Patent Office / Office européen des brevets**

(11) **EP 3 021 596 B1**

(12) **EUROPEAN PATENT SPECIFICATION**

(45) Date of publication and mention of the grant of the patent:
**28.03.2018 Bulletin 2018/13**

(51) Int Cl.:
*H04Q 9/00* (2006.01)    *H04B 1/00* (2006.01)
*H04B 11/00* (2006.01)    *H04N 21/41* (2011.01)
*H04B 1/20* (2006.01)

(21) Application number: **13859613.5**

(22) Date of filing: **12.09.2013**

(86) International application number:
**PCT/KR2013/008275**

(87) International publication number:
**WO 2015/005529 (15.01.2015 Gazette 2015/02)**

(54) **SIGNAL OUTPUT APPARATUS, SIGNAL PROCESSING APPARATUS, AND SIGNAL PROCESSING METHOD**

SIGNALAUSGABEVORRICHTUNG, SIGNALVERARBEITUNGSVORRICHTUNG UND SIGNALVERARBEITUNGSVERFAHREN

APPAREIL DE DÉLIVRANCE DE SIGNAL, APPAREIL DE TRAITEMENT DE SIGNAL ET PROCÉDÉ DE TRAITEMENT DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2013 KR 20130079742**

(43) Date of publication of application:
**18.05.2016 Bulletin 2016/20**

(73) Proprietor: **Research & Business Foundation Sungkyunkwan University**
**Suwon-si, Gyeonggi-do 440-746 (KR)**

(72) Inventors:
• **CHOO, Hyun Seung**
  **Gwacheon-si**
  **Gyeonggi-do 427-800 (KR)**
• **MYOUNG, Sung Ho**
  **Suwon-si**
  **Gyeonggi-do 441-440 (KR)**

• **CHUNG, Myoung Beom**
  **Seoul 151-817 (KR)**
• **LEE, Tae Woo**
  **Guri-si**
  **Gyeonggi-do 471-742 (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
WO-A2-2013/030672    KR-A- 20080 042 512
KR-A- 20120 030 628    KR-A- 20130 055 715
KR-B1- 101 143 343    KR-B1- 101 156 526
US-A1- 2005 219 068    US-A1- 2010 030 838

## EP 3 021 596 B1

**Description**

The present invention relates to a signal output device, a signal processing device, and a signal processing method.

US 2010/030838 A1 discloses a method of communicating with an electronic device comprising the steps of providing a computer having an audible sound receiving and generating a sub-system including a microphone, transmitting from a source at least one ultrasonic acoustic signal, and coded with information to the computer, and receiving said at least one signal by said microphone, to be detected by said computer.

WO 2013/030672 A2 discloses a system, apparatus, method and computer program product for controlling an electronic device using sonic emissions. A peripheral device receives user input and generates one or more sonic emissions based at least in part on the user input. The electronic device detects the sonic emissions and executes one or more instructions with an associated processor based on the detected sonic emissions.

US 2005/219068 A1 discloses an acoustic communication system. Encoders for encoding a data signal within an audio signal are disclosed. In some of the encoders, the audio signal is separated into a tonal part and a residual part, and the data signal is shaped based on the residual part. In other encoders, the data signal is separated into a tonal part and a residual part, and the data signal is combined with the audio signal in dependence upon the residual part. In other encoders the rate at which the data is encoded within the audio signal is varied in dependence upon the audio signal.

## BACKGROUND

As the mobile communication technologies are developed throughout the world, smart devices are being rapidly supplied.

Most of recently released smart devices can transmit and receive various data with other smart devices, remote servers or others, through various types of communication technologies such as 3G, Wi-Fi, Bluetooth, long term evolution (LTE), TCP/IP socket communication, and UDP socket communication. In addition, the smart devices are equipped with various sensors (modules). As representative examples, there are accelerometers, global positioning system (GPS) modules, ambient light sensors, dual microphones, proximity sensors, dual camera modules, compass sensors, gyroscope sensors, and so on.

Applications (Apps), which provide users with various services by using the communication technologies and the equipped sensors, have been continuously developed. The applications may control the modules or the sensors equipped in the smart devices, transmit and receive or share data with other smart devices or servers through the communication technologies and synchronization technologies, or control modules or sensors equipped in other smart devices.

Especially, since the technology of control between smart devices can be utilized in various fields, it has been actively investigated. Chiu-Chiao Chung has promoted a research on a method for controlling Bluetooth-based smart devices and power consumption (2011 Second International Conference on Innovations in Bio-inspired Computing and Applications, December 16, 2011). Souvik Maiti has studied interoperation using the Bluetooth and Wi-Fi technologies together by using OSGi (2011 Second International Conference on Emerging Applications of Information Technology, February 19, 2011).

However, these technologies have restricted conditions. For example, the technology of control between smart devices using Wi-Fi requires that both the devices be in the state of being connected to the Wi-Fi communication network. In addition, using the socket communication requires a separate server, to which both devices can be accessed, and using the Bluetooth module requires that pairing operation between both devices be preceded, and both the devices be based on an identical operation system.

Accordingly, researches on new technologies, which can accurately perform wireless control between smart devices in a short distance without requiring specific restricted conditions, are necessary.

Meanwhile, in this regard, Korean Patent Application Publication No. 2008-0042512 (Title of Invention: Remote Control System and Control Method thereof) describes a control technology, which transmits a key signal input from a user by using one or more different oscillation frequencies, and discriminates a normal signal, in which signal distortion has not occurred, from infrared signals of the two input channels to enable operation according to the corresponding infrared signal.

## SUMMARY

In view of the foregoing, example embodiments provide a technology enabling a signal output device to control a target device located in a short distance, by using a high frequency within an audible frequency band without construction of separate hardware or connection to a network.

2

Example embodiments also provide a method that correctly generates a control signal for a device to be controlled without causing false operation even when peripheral noise exists, and controls the device in the state that surrounding people are not affected.

However, the problems sought to be solved by the present disclosure are not limited to the above description, and other problems can be clearly understood by those skilled in the art from the following description.

In accordance with the invention, there is provided a device outputting a signal for controlling another peripheral target device, comprising: a target signal generation unit that generates a target signal for controlling the target device based on a specific frequency set within an audible frequency; a signal storage unit that stores a base signal having a frequency differently set from the specific frequency within the audible frequency; and a signal output unit that outputs the target signal and the base signal together during pre-set threshold time or longer, as defined in claim 1.

In accordance with the invention, there is provided a device processing a signal received from a periphery, the device comprising: a signal reception unit that receives a sound wave signal of an audible frequency band; a signal analysis unit that analyzes the sound wave signal, to determine a certain signal received together with a base signal for pre-set threshold time within the sound wave signal to be a target signal; and a control signal generation unit that generates a control signal for controlling the corresponding device based on the target signal, wherein the base signal and the target signal are signals output from a signal output device located at a periphery of the corresponding device for the threshold time or longer, and have differently set frequencies within the audible frequency, as defined in claim 7.

In accordance with the invention, there is provided a method for processing a signal received from a periphery in a signal processing device, the method comprising: analyzing a sound wave signal of an audible frequency band received by the signal processing device; determining whether there is a certain signal received together with a base signal for pre-set threshold time within the sound wave signal; and determining the certain signal to be a target signal if there is the certain signal; and generating a control signal for controlling the signal processing device based on the target signal, wherein the base signal and the target signal are signals output from the signal output device located at a periphery of the signal processing device for the threshold time or longer, and have differently set frequencies within the audible frequency, as defined in claim 9.

In accordance with the example embodiments, by using the signal output device and the signal processing device, which are the technical means of the foregoing example embodiments, it is possible to correctly transmit a target signal for control from the signal output device to the peripheral signal processing device in the environment that background noise exists, without adding separate hardware and accessing a network.

In addition, the signal output device and the signal processing device, which are the technical means of the foregoing example embodiments, realizes interactive control in a short distance without affecting surrounding people, by mutually transmitting and receiving a signal of a high frequency that most surrounding people cannot easily hear, and enables accurate control even when a target signal or a base signal between both the devices partially has a loss.

## BRIEF DESCRIPTION OF THE DRAWINGS

FIG. 1 illustrates a signal output device and a signal processing device together in accordance with an example embodiment;

FIG. 2 shows problems that may occur when device control is performed by using a sound wave signal of an audible frequency band;

FIG. 3 illustrates an example for a process for processing a signal transmitted and received between the signal output device and the signal processing device illustrated in FIG. 1;

FIG. 4 is a flow chart showing a signal processing method in accordance with an example embodiment;

FIG. 5 is a pseudo code for depicting a signal processing method in accordance with an example embodiment;

FIG. 6a illustrates an example for a device that outputs a signal for controlling photographing of another peripheral target device;

FIG. 6b illustrates an example for a signal processing device that performs photographing based on a signal received from a periphery;

FIG. 7 is a graph showing control accuracy depending on a distance between a signal output device and a device to be controlled and locations thereof;

FIG. 8 is a graph showing maximum output sizes of currently released smart devices; and

FIG. 9 is a graph showing results of performance comparison between the method suggested in the example embodiments and a conventional method.

## DETAILED DESCRIPTION

Hereinafter, example embodiments will be described in detail with reference to the accompanying drawings so that inventive concept may be readily implemented by those skilled in the art. However, it is to be noted that the present disclosure is not limited to the example embodiments but can be realized in various other ways. In the drawings, certain parts not directly relevant to the description are omitted to enhance the clarity of the drawings, and like reference numerals denote like parts throughout the whole document.

Throughout the whole document, the term "comprises or includes" and/or "comprising or including" used in the document means that one or more other components, steps, operations, and/or the existence or addition of elements are not excluded in addition to the described components, steps, operations and/or elements.

The example embodiments relate to control between both devices located in a short distance, using a high frequency within an audible frequency band (16 Hz to 20 KHz) that people can hear. Here, the high frequency means a frequency of 18 KHz or higher within the audible frequency and corresponds to a frequency band that most people cannot recognize.

Specifically, in accordance with an example embodiment, a signal of the high frequency within the audible frequency band is transmitted from a first device to a second device, the second device is controlled based on the corresponding received signal, and false operation or a recognition error resulting from unexpected noise at the peripheries of the first and second devices can be prevented with the use of the signal of the high frequency.

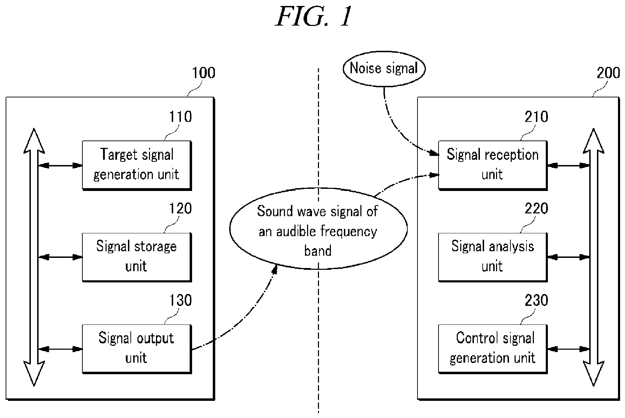

Hereinafter, detailed configuration of each of the devices suggested in the example embodiments is described with reference to **FIG. 1**. **FIG. 1** illustrates a signal output device and a signal processing device together in accordance with an example embodiment.

The signal output device 100 and the signal processing device 200 are personal/public devices, are not limited with respect to types, performance, shapes and others thereof, and can be realized as mobile devices or computers. Here, the mobile devices are mobile communication devices assuring portability and mobility and may include, for example, any types of handheld-based wireless communication devices such as personal communication systems (PCSs), global systems for mobile communication (GSM), personal digital cellulars (PDCs), personal handyphone systems (PHSs), personal digital assistants (PDAs), international mobile telecommunication (IMT)-2000, code division multiple access (CDMA)-2000, W-code division multiple access (W-CDMA), wireless broadband Internet (WiBro) terminals, and smart phones. In addition, the computers may include notebooks, desktops, laptops, tablet PCs, slate PCs and so on, which assure portability and mobility and are equipped with the WEB Browser.

In addition, a specific application for achieving the control technology suggested by the example embodiments may be provided in each of the signal output device 100 and the signal processing device 200. The corresponding application may be downloaded from a management server through a network to be provided in each of the devices, or may be provided in advance at the time that each of the devices is manufactured. The signal output device 100 may be provided with a transmission version application capable of outputting a target signal for controlling a device to be controlled and a base signal that can be a reference. The signal processing device 200 may be provided with a reception version application capable of generating a control signal for the corresponding device based on the target signal.

Additionally, those skilled in the art can easily understand that the descriptions provided hereinafter can also be applied to the case where the signal output device 100 is provided with the reception version application, and the signal processing device 200 is provided with the transmission version application.

The signal output device 100 outputs a signal for controlling another peripheral target device, and includes a target signal generation unit 110, a signal storage unit 120, and a signal output unit 130. Although **FIG. 1** illustrates one signal processing device 200, the signal output device 100 may control a multiple number of signal processing devices at the same time.

The target signal generation unit 110 generates a target signal for controlling another peripheral target device, and the target signal is based on a specific frequency set within the audible frequency.

In this case, the specific frequency is preferably set to a frequency of 18 KHz or higher within the audible frequency.

In addition, the target signal generation unit 110 may change the specific frequency depending on an input signal received by a user, and generate various target signals depending on an input signal. The input signal may be generated through an input device provided in the signal output device 100 or separately equipped, and transferred from the input device to the target signal generation unit 110.

The signal storage unit 120 stores a base signal having a frequency differently set from the above-described specific frequency within the audible frequency.

In this case, the frequency of the base signal is preferably set to a frequency of 18 KHz or higher within the audible frequency.

In addition, the base signal may include two or more signals having frequencies differently set from the specific frequency of the target signal, and the frequencies of the two or more signals may be set to frequencies of 18 KHz or higher within the audible frequency. The frequencies of the two or more signals and the specific frequency of the target signal may have a difference of 600 Hz or higher to minimize the mutual frequency interference.

The signal output unit 130 outputs the above-described target signal and the base signal together for pre-set threshold time or longer.

Specifically, the signal output unit 130 may include a speaker and a low-latency audio, which work in the manner of reaction against a magnet when electricity flows through coils, and outputs the target signal and the base signal in a sine wave form according to a sampling rate of the low-latency audio based on Math Formulas 1 and 2 below. The sampling rate may be a constant that determines how finely time needs to be divided during an analogue-digital converting process.

[Math Formula 1]

$$f(n) = A \cdot \sin(\theta(n))$$

[Math Formula 2]

$$\theta(n) = 2\pi \cdot f \cdot \frac{n}{r}$$

Here, n is a constant indicating an index value of the latest sample, and A is maximum amplitude. In addition, f means a frequency that will occur in the low-latency audio, and r is a sampling rate of the low-latency audio.

In this way, a value for each sample point can be calculated by Math Formulas 1 and 2, and the signal output unit 130 can output the target signal and the base signal with desired frequencies.

For reference, the low-latency audio outputs at least one variable frequency via CPU equipped in the signal output device 100. This frequency is used for the purpose of sending various signal data. The example embodiments may prepare and use a sound file including two or more signals in advance for standing frequency output. By using the sound file prepared in this way, it is possible to realize the base signal including n different frequencies.

Meanwhile, the signal processing device 200 processes a signal received from a periphery, and includes a signal reception unit 210, a signal analysis unit 220, and a signal generation unit 230.

The signal reception unit 210 receives a sound wave signal of an audible frequency band. The signal reception unit 210 can be realized as a microphone equipped in or externally connected to the smart device 200. The microphone may be driven in previously known various manners including inducing electricity due to reaction against a magnet, detecting changes of capacitance depending on a pressure of a sound, and others.

The signal analysis unit 220 analyzes a sound wave signal, and regards a certain signal received together with the base signal for pre-set threshold time within the sound wave signal as a target signal. In this case, the base signal and the target signal are signals output from the signal output device 100 for threshold time or longer, and have differently set frequencies within the audible frequency.

That is, the signal analysis unit 220 can discriminate the target signal output from the signal output device 100 and a noise signal resulting from peripheral noise within the sound wave signal received through the signal reception unit 210.

In addition, the frequency of the base signal and the frequency of the target signal are preferably set to frequencies of 18 KHz or higher within the audible frequency.

The control signal generation unit 230 generates a control signal for controlling the corresponding signal processing device 200 based on the target signal.

By using the signal output device 100 and the signal processing device 200 that have been described, a user can perform short-distance wireless control between both devices. That is, a user can accurately control the signal processing device 200 located at a periphery by using the signals of the audible frequency band output from the signal output device 100 even without connection to a network or construction of separate hardware.

More specifically, the descriptions provided hereinafter relate to the reason that the signal output device 100 outputs the base signal and the target signal together for pre-set threshold time or longer, and the signal processing device 200 regards a certain signal received together with the base signal for pre-set threshold time within the sound wave signal as the target signal.

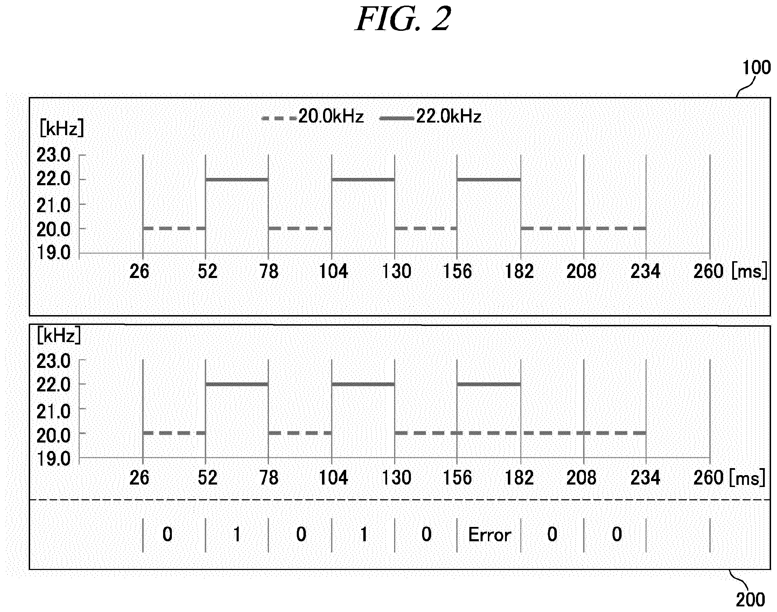

**FIG. 2** illustrates problems that may occur when device control is performed by using the sound wave signal of the audible frequency band. **FIG. 2** shows a technique of generating 1 bit data per 26 ms only by using a 20 KHz signal and a 22 KHz signal within the audible frequency, and generating total 8 bit data for 208 ms. In this case, however, since the sound wave signal of the audible frequency band is used, the signal processing device 200, which is a device to be controlled, may be easily exposed to peripheral noise or a noise signal. As a result, unintended error data may be generated.

In **FIG. 2,** the signal output device 100 outputs 8 bit data, i.e., "01010100" via combination of the 20 KHz signal and the 22 KHz signal for 208 ms ranging from 26 ms to 234 ms. The signal processing device 200 receives the 22 KHz signal output in the signal output device 100 for 26 ms ranging from 156 ms to 182 ms, and the 20 KHz signal resulting from peripheral noise together, to generate the 8 bit data, i.e., "01010?00."

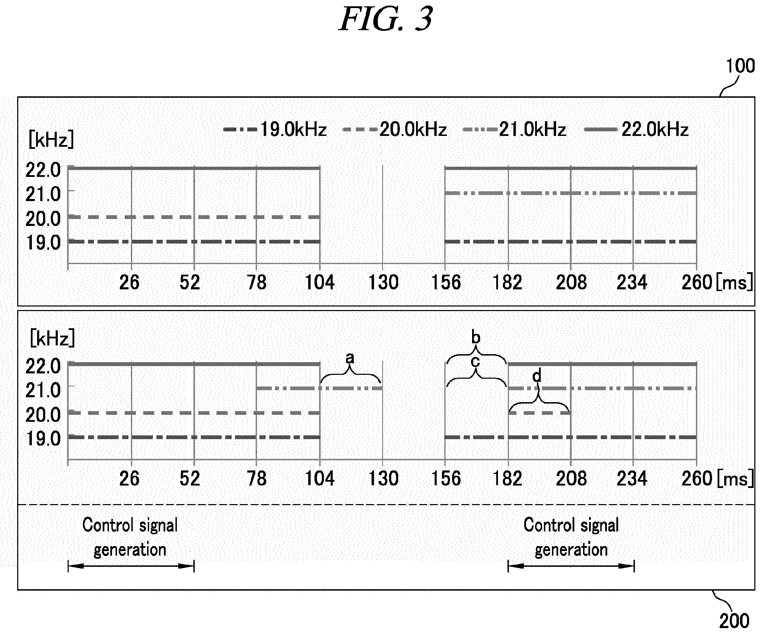

Accordingly, a technique that can minimize the influence of peripheral noise or noise signals is necessary, and is described hereinafter with reference to **FIG. 3. FIG. 3** illustrates an example for a process for processing a signal transmitted and received between the signal output device and the signal processing device illustrated in **FIG. 1.**

In **FIG. 3,** the signal output device 100 outputs the base signal and the target signal together for total two (2) time periods (104 ms*2) ranging from 0 ms to 104 ms and from 156 ms to 260 ms, respectively. The base signal includes two signals having different frequencies (19 KHz and 22 KHz) within the audible frequency. A first target signal of from 0 ms to 104 ms has a specific frequency of 20 KHz. A second target signal of from 156 ms to 260 ms has a specific frequency of 21 KHz. As described above, the base signal may be a signal having one frequency within the audible frequency, or include two or more signals having two or more different frequencies. In addition, since the threshold time $\alpha$ has been pre-set to 52 ms, the signal output device 100 may output the base signal and the target signal together for 104 ms over the threshold time.

The signal processing device 200, which is a device to be controlled, may analyze whether there is a certain signal received together with the base signal for 52 ms, which is the threshold time, or longer within the sound wave signal. If the certain signal exists, the signal processing device 200 regards the certain signal as the target signal. That is, if the certain signal has not been received together with the base signal, or has been received for a time period below the pre-set threshold time even though it has been received together with the base signal, the corresponding signal may be determined to be a noise signal resulting from peripheral noise.

For the zone of from 0 ms to 104 ms, the signal processing device 200 receives a certain signal of 21 KHz between 78 ms and 130 ms. Since the corresponding signal has not been received together with the base signal (19KHz, 22 KHz) for the zone a and has been received together with the base signal for only 26 ms, the signal processing device 200 can determine the corresponding signal to be a noise signal. In addition, since the signal processing device 200 receives a certain signal of 20 KHz together with the base signal between 0 ms and 52 ms (or for longer time from 0 ms to 104 ms), the certain signal can be determined to be the target signal output from the signal output device 100, and the control signal can be generated based on the target signal.

For the zone of from 156 ms to 260 ms, the signal processing device 200 receives a signal partially having input losses (b, c) between 156 ms and 182 ms, while receiving a certain signal d of 20 KHz from 182 ms to 208 ms. Since the signal d has been received together with the base signal (19 KHz, 22 KHz) for only 26 ms, the signal processing device 200 can determine the signal d to be a noise signal. In addition, since the signal processing device 200 receives a certain signal of 21 KHz from 182 ms to 234 ms (or longer, i.e., 260 ms) even though the input losses have partially occurred, the signal processing device 200 can determine the certain signal to be the target signal output from the signal output device 100 and generate the control signal based on the target signal.

As described, by using the signal output device 100 and the signal processing device 200 suggested by the example embodiments, a user can accurately perform short-distance wireless control between both devices, even though interference by peripheral noise or a partial input loss occurs.

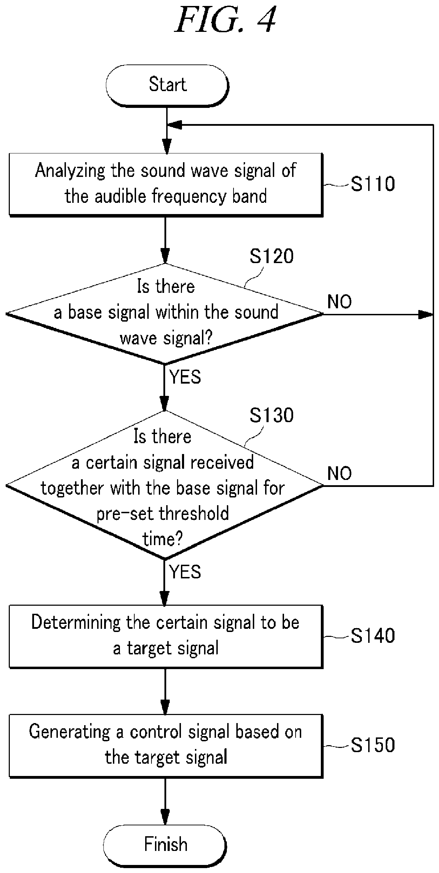

Meanwhile, hereinafter, a method, by which the signal processing device 200 processes a signal received from a periphery, is described with reference to **FIG. 4. FIG. 4** is a flow chart showing a signal processing method in accordance with an example embodiment.

First, the signal processing device 200 analyzes the sound wave signal of the audible frequency band received through a microphone or others (S110). A smart device 200 may analyze the sound wave signal by performing the Fast Fourier Transformation (FFT).

Subsequently, the signal processing device 200 determines whether there is a certain signal received together with the base signal for pre-set threshold time within the analyzed sound wave signal. Specifically, determining existence of the base signal within the sound wave signal (S120), and determining existence of a certain signal received together with the base signal for pre-set threshold time (S130) may be proceeded with in turn.

If the base signal and the certain signal exist within the analyzed sound wave signal, the signal processing device 200 regards the certain signal as the target signal (S140), and generates the control signal for controlling the signal processing device 200 based on the target signal (S150). The generated control signal may be used for certain operation of the signal processing device 200, or driving of a certain module or execution of a program within the smart device 200. In this case, the base signal and the target signal are signals output from the signal output device 100 located at the periphery of the signal processing device 200 for threshold time or longer, and have differently set frequencies within the audible frequency.

If there is a signal received separately from the base signal or a signal received together with the base signal for a time period below the pre-set threshold time within the analyzed sound wave signal, the signal processing device 200 determines the received signal to be a peripheral noise signal, and may not generate the control signal. Thereafter, the signal processing device 200 may analyze the sound wave signal of the audible frequency band once again, if necessary (S110).

Additionally, the frequency of the base signal and the frequency of the target signal that have been described may be differently set to frequencies of 18 KHz or higher within the audible frequency.

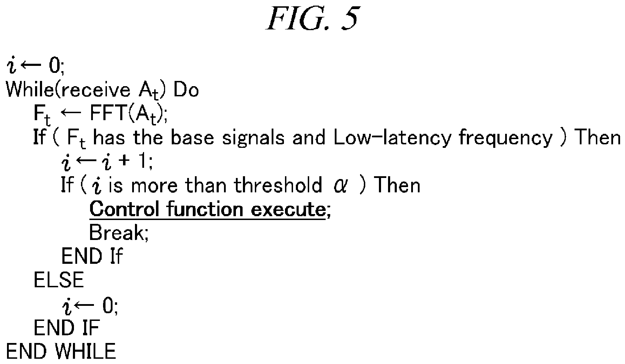

**FIG. 5** is a pseudo code for depicting the signal processing method in accordance with an example embodiment.

The corresponding pseudo code may be executed in the signal processing device 200 or the reception version application provided in the signal processing device 200.

The variable i for identification of the control signal is initialized to zero (0), and the Fast Fourier Transformation for the sound wave signal At received through the microphone or others of the signal processing device 200 is executed. Thereafter, while increasing the value i, the signal processing device 200 continuously checks whether there are the above-described base signal and a certain signal received together with the base signal for pre-set threshold time $\alpha$ within the analyzed sound wave signal At. When the accumulated i is identical to the pre-set threshold time $\alpha$, the signal processing device 200 determines the corresponding certain signal to be the target signal and generates the control signal based on the target signal. If additional control is necessary after certain operation is executed by the control signal, the variable i may be initialized once again to zero (0), and the above-described process is repeated.

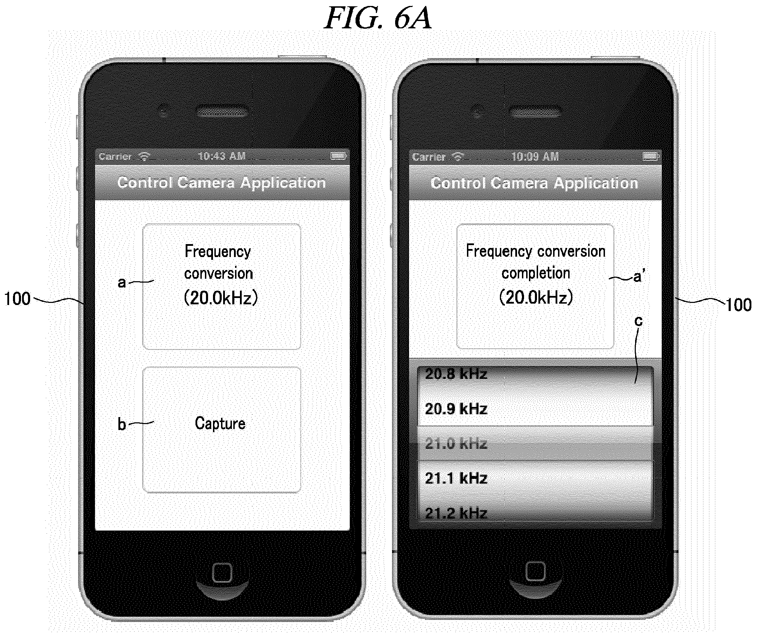

Furthermore, hereinafter, actual realization of the technology suggested in the example embodiment and performance evaluation thereof are described with reference to FIG. **6a, FIG. 6b, FIG. 7** and **FIG. 8.**

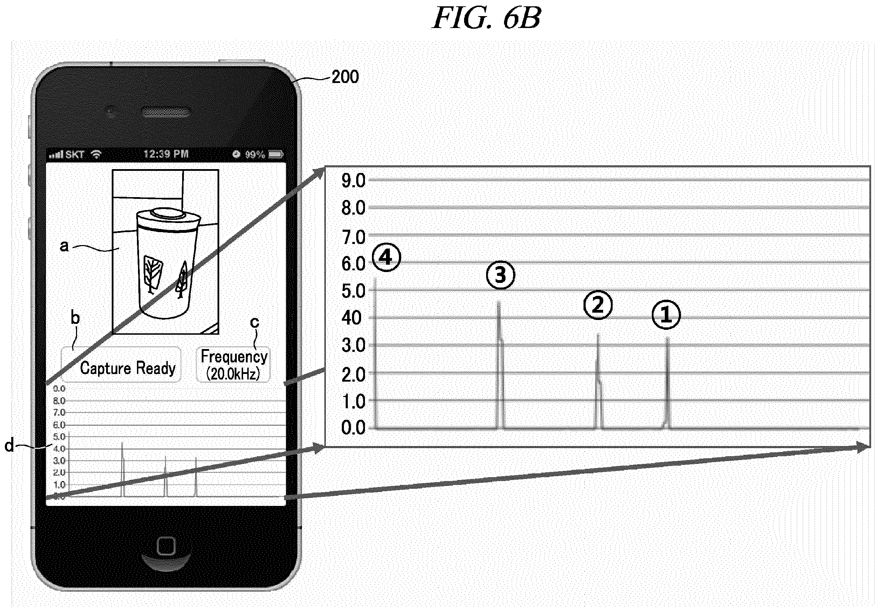

**FIG. 6a** illustrates an example for a device outputting a signal for controlling photographing of another peripheral target device, and **FIG. 6b** illustrates an example for a signal processing device that performs photographing based on a signal received from a periphery.

Tests were conducted by adopting i-phones for both the signal output device 100, which corresponds to a controlling device, and the signal processing device 200, which corresponds to a device to be controlled. A transmission version camera control application was provided in the signal output device 100, and a reception version camera control application was provided in the signal processing device 200, which is a device to be controlled. The applications were prepared by using "Xcode" to operate in the iOS environment. In addition, a base signal prepared in a basic sine wave with one-second length by using "Tone Generator Software" supplied by NCH Software was pre-stored in the wav format in the transmission version camera control application, and the base signal includes a first signal having a frequency of 19.0 KHz and a second signal having a frequency of 22.0 KHz.

The left side of **FIG. 6a** corresponds to a main screen of the transmission version camera control application provided in the signal output device 100. Specifically, there are arranged (a) a frequency change button to change a specific frequency, which corresponds to a frequency of a target signal, and (b) a capture bottom to generate a target signal for "performance of photographing of another signal processing device 200." When a user selects the capture button b, the base signal and the target signal are output together for pre-set threshold time (e.g., 104 ms) or longer through a speaker or others of the signal output device 100.

The right side of **FIG. 6a** corresponds to a screen displayed when a user selects the frequency change button a on the main screen. Specifically, a user can change the certain frequency from 20 KHz into 21 KHz by using the scroll type of the selection interface c, and confirm the result of the change on the screen a' right above the selection interface. At this time, in consideration of the problem of confusion with the frequency of the base signal, the specific frequency with a difference of 600 Hz or more from the frequency of the base signal may be set, and the specific frequency may be changed in a unit of 0.1 KHz.

**FIG. 6b** is a screen of the reception version camera control application provided in the signal processing device 200 wirelessly controlled by the signal output device 100. Specifically, the photograph of a cup is a thumbnail image photographed by the control signal. When a user selects the capture ready button b, the camera module of the signal processing device 200 is driven. Once the control signal is generated, the reception version camera control application performs the photographing operation. In addition, the reception version camera control application shows a specific frequency c of a mutually appointed target signal in the relation to the transmission version camera control application. The undermost part d collects and visually shows the control signals generated after the camera module is driven. In this case, the x axis refers to a time axis, which indicates that the control signal for photographing has been generated total 4 times in the 1, 2, 3 and 4 order. The y axis refers to a length of the control signal upon generation of the control signal, i.e., the number of FFT bins for the corresponding frequency (the specific frequency selected by a user), and 1,000 bins mean 1.0.

Next, a test for first performance evaluation of the technology suggested by the example embodiment was conducted as described hereinafter.

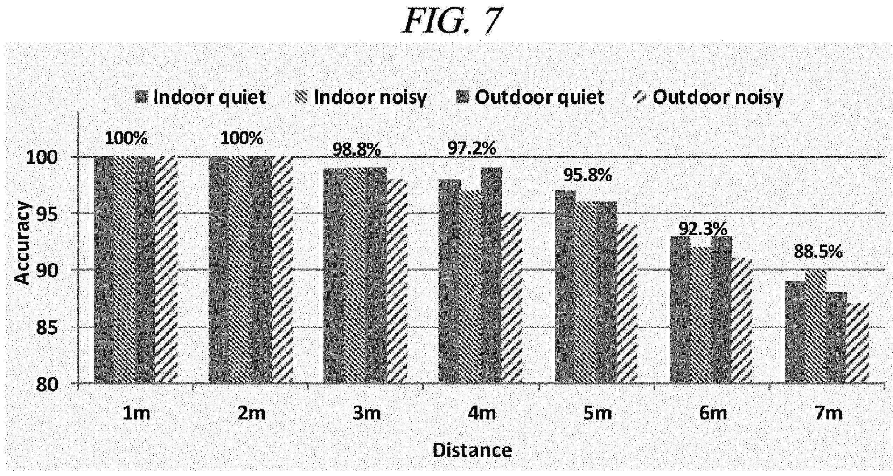

The test environment was divided into four (4) environments such as a quiet indoor environment, a noisy indoor environment, a quiet outdoor environment, and a noisy outdoor environment. The environment of approximately 40 dB, which corresponds to average living noise at home, was regarded as the quiet environment. The environment of approximately 60 dB, which corresponds to noise occurring upon normal everyday conversation, was regarded as the noisy environment. In addition, the distance between devices for the testing was increased by 1 m up to 7 m, and the tester generated the target signal 100 times for each of the environments by using the signal output device 100. For the signal output device 100, i-phone 5 was used. For the signal processing device 200, which is a device to be controlled, i-pad 3 was used. In addition, the pre-set threshold time $\alpha$, which is a reference for determining a certain signal to be the target signal in the signal processing device 100, was set to 52 ms. Time k, for which the signal output device 100 outputs the target signal and the base signal together, was set to 104 ms. The specific frequency of the target signal was set to 20 KHz. Table 1 below provides the test results. **FIG. 7** is a graph showing control accuracy depending on the distance between the signal output device and the device to be controlled, and locations of the devices.

[Table 1]

| Distance | | 1m | 2m | 3m | 4m | 5m | 6m | 7m | Accuracy |
|---|---|---|---|---|---|---|---|---|---|
| Sensing a control signal | Indoor quiet | 100 | 100 | 99 | 98 | 97 | 93 | 89 | 96.6% |
| | Indoor noisy | 100 | 100 | 99 | 97 | 96 | 92 | 90 | 96.3% |
| | Outdoor quiet | 100 | 100 | 99 | 99 | 96 | 93 | 88 | 96.4% |
| | Outdoor noisy | 100 | 100 | 98 | 95 | 94 | 91 | 87 | 95% |

The control accuracy within 7 m was 96.6% for the quiet indoor environment, 96.3% for the noisy indoor environment, 96.4% for the quiet outdoor environment, and 95% for the noisy outdoor environment. The whole average was approximately 96.1%.

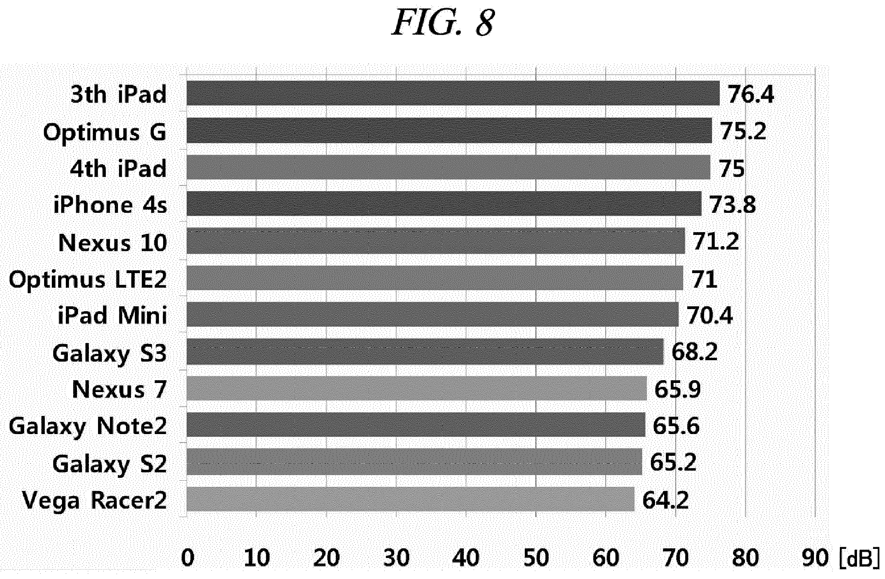

FIG. 8 is a graph showing maximum output sizes of currently released smart devices. Since the internal speaker sound pressures of the smart devices are mostly approximately 70 dB, an approximately 99% success rate is achieved within 4 m. However, since the sound pressure is rapidly reduced (inversely proportional to the square of the distance) as the distance from the speaker increases, it is observed that the success rate becomes gradually lower beyond 5 m. However, it should be noted that taking pictures of persons is usually performed within 7 m, and the wireless control between both the devices is possible with the 88.5% success rate even in the distance of 7 m without requiring construction of a network or separate hardware. Further, there were merely a few occasions where generation of the control signal was failed during the whole testing, and there was no occasion where false operation due to peripheral noise, rather than by the control single, occurred. In other words, a user can execute the short-distance wireless control between both the devices with the high success rate by using the technology suggested by the example embodiments, substantially regardless of peripheral noise and environmental conditions.

Furthermore, a test for second performance evaluation of the technology suggested by the example embodiments was conducted as described hereinafter.

The corresponding test used the method of "SmartGuide - A smartphone museum guide with ultrasound control" suggested in the journal, Procedia Computer Science by Pascal Bihler in 2011. The method suggested by Pascal provides that when a smart device recognizes the specific high frequency, it receives information (specific contents) for museum guides from the web server to provide the information to a user.

However, in the corresponding test, the photographing operation was performed, instated of the operation to receive the specific contents from the web server, and to this end, the signal processing part of the signal processing device 200, which is a device to be controlled, was partially changed.

As in the first performance evaluation, the test environment included four (4) environments (the quiet indoor environment, the noisy indoor environment, the quiet outdoor environment, and the noisy outdoor environment), and the tester conducted the corresponding test 100 times in the distance of 2m for each of the environments. The other conditions (the threshold time $\alpha$, the time k for outputting the target signal and the base signal together, and the specific frequency of the target signal, the reference for discriminating the quiet and noisy environments, and others) were the same as those in the first performance evaluation.

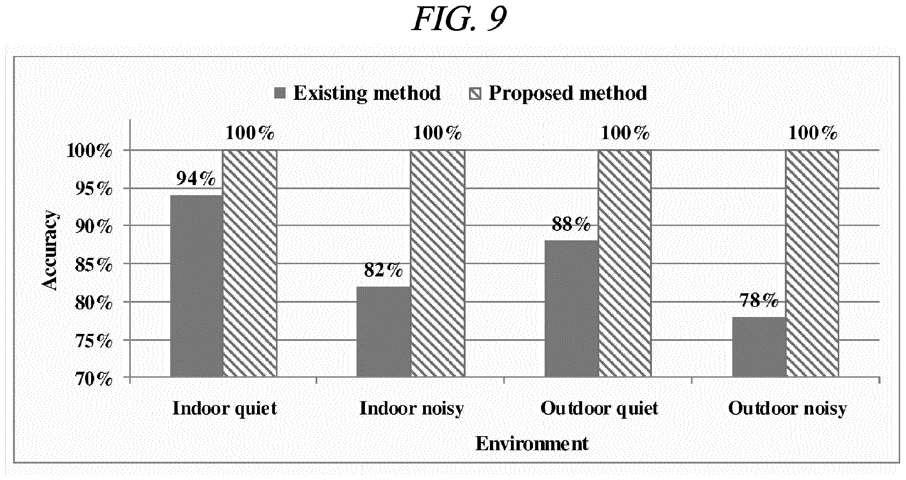

FIG. 9 is a graph showing results of performance comparison between the method suggested by the example embodiments and a conventional method.

In case of the conventional method (Pascal method), the control success rate for the indoor environment is average 88%, and the control success rate for the outdoor environment is average 83%. Considering that the control success rate is reduced in the outdoor and noisy space, rather than the indoor and quiet space, it is identified that the conventional method is highly sensitive to peripheral environments, noise or others.

On the other hand, in case of the method suggested by the example embodiments, the control success rate for all the indoor and outdoor environments is 100%. That is, it is identified that the method suggested by the example embodiments is not affected by peripheral environments, noise, or others, compared to the conventional method, and that the control reliability within a specific distance is significantly high.

Furthermore, a test for third performance evaluation of the technology suggested by the example embodiments was conducted as described hereinafter.

As described above, the frequency of the base signal and the specific frequency of the target signal are preferably set to frequencies of 18 KHz or higher within the audible frequency. This test is directed to seeing how fully surrounding people recognize such a signal having the high frequency within the audible frequency.

The persons to be tested are total 20, which include 5 persons in each of the age groups of 10s, 20s, 30s, and 40s, and the test environment includes the same four (4) environments as those for the first performance evaluation. To proceed with the test, one tester and one person to be tested were allowed to be freely placed together within a space in an approximately $10m^2$ ($7m \times 7m$) size, and the tester generated the target signal total 10 times for 3 minutes for each of the environments by using the signal output device 100. However, since the person to be tested would recognize generation of the target signal and the control signal due to the "clicking" sound occurring upon photographing in the signal processing device 200, which is a device to be controlled, the test checked only the number of times of the control signal generated by the signal processing device 200 without performing the photographing operation. In addition, the test checked the number of times the person to be tested said that he/she heard signals output for particular time due to the tester's generation of the target signal via the signal output device 100. Table 2 below provides the test results.

[Table 2]

| 5 persons per 10 times | 10s | 20s | 30s | 40s | Average |
|---|---|---|---|---|---|
| Quiet indoor environment | 5 times | 3 | 0 | 0 | 4% |
| Noisy indoor environment | 2 | 0 | 0 | 0 | 1% |
| Quiet outdoor environment | 3 | 2 | 0 | 0 | 2.5% |
| Noisy outdoor environment | 1 | 1 | 0 | 0 | 1% |

The rates of recognition of the signals output from the signal output device 100 in the environments were 4% for the 10s, 1% for the 20s, 2.5% for the 30s, and 1% for the 40s. Especially, it was observed that the 30s and the 40s do not recognize the signals at all. Although the signals are more fully recognized as the age is lowered, the recognition rate for the 10s was merely approximately 5.5%.

To be more specific, it was identified that only one of the teenage persons to be tested recognized the signals three (3) times in the quiet indoor environment, one (1) time in the noisy indoor environment, two (2) times in the quiet outdoor environment, and one (1) time in the noisy outdoor environment. Upon a separate hearing test, it was identified that the corresponding person to be tested recognizes a signal having a frequency of 19.0 KHz.

Accordingly, except for the rare occasion that the high frequency within the audible frequency can be recognized, it was identified that short-distance wireless control between both devices can be accomplished with a high success rate by using the technology suggested by the example embodiments, without affecting surrounding people.

Meanwhile, each of the components illustrated in **FIG. 1** may be configured with a type of a "module." The "modules" imply software or hardware such as a field programmable gate array (FPGA) or an application specific integrated circuit (ASIC), and they carry out a predetermined function. However, the modules are not limited to the software or the hardware. The modules may be stored in an addressable storage medium or may be configured to implement one or more processors. The components and the modules, and functions thereof can be combined with each other or can be divided.

The above description of the example embodiments is provided for the purpose of illustration, and it would be understood by those skilled in the art that various changes and modifications may be made without changing technical conception and essential features of the example embodiments. Thus, it is clear that the above-described example embodiments are illustrative in all aspects and do not limit the present disclosure. For example, each component described to be of a single type can be implemented in a distributed manner. Likewise, components described to be distributed can be implemented in a combined manner.

## EXPLANATION OF CODES

100: Signal output device 110: Target signal generation unit
120: Signal storage unit 130: Signal output unit
200: Smart device 210: Signal reception unit
220: Signal analysis unit 230: Control signal generation unit

**Claims**

1. A device (100) for outputting a signal for controlling another peripheral target device (200), comprising:

   a target signal generation unit (110) that is arranged to generate a target signal for controlling the target device (200) based on a specific frequency set within an audible frequency;
   a signal storage unit (120) that is arranged to store a base signal having a frequency differently set from the specific frequency within the audible frequency; and
   a signal output unit (130) that is arranged to output the target signal and the base signal together during pre-set threshold time or longer.

2. The device (100) for outputting a signal of claim 1,
   wherein each of the specific frequency and the frequency of the base signal is set to a frequency of 18 KHz or higher within the audible frequency.

3. The device (100) for outputting a signal of claim 1,
   wherein the target signal generation unit (110) is arranged to change the specific frequency depending on an input signal received by a user and to generate the target signal.

4. The device (100) for outputting a signal of claim 1,
   wherein the base signal includes at least two signals having frequencies differently set from the specific frequency, and each of the frequencies of the at least two signals is set to a frequency of 18 KHz or higher within the audible frequency.

5. The device (100) for outputting a signal of claim 4,
   wherein the frequencies of the at least two signals and the specific frequency have a difference of 600 Hz or higher.

6. The device (100) for outputting a signal of claim 1,
   wherein the signal output unit (130) comprises a low-latency audio, and is arranged to output the target signal and the base signal in a sine wave form according to a sampling rate of the low-latency audio.

7. A device (200) for processing a signal received from a periphery, the device (200) comprising:

   a signal reception unit (210) that is arranged to receive a sound wave signal of an audible frequency band;
   a signal analysis unit (220) that is arranged to analyze the sound wave signal, and to regard a certain signal received together with a base signal for pre-set threshold time within the sound wave signal as a target signal; and
   a control signal generation unit (230) that is arranged to generate a control signal for controlling the corresponding device based on the target signal,
   wherein the base signal and the target signal are signals output from a signal output device (100) located at a periphery of the corresponding device for the threshold time or longer, and
   wherein a frequency of the base signal and a frequency of the target signal are differently set within the audible frequency.

8. The device (200) for processing a signal received from a periphery of claim 7,
   wherein each of the frequency of the base signal and the frequency of the target signal is set to a frequency of 18 KHz or higher within the audible frequency.

9. A method for processing a signal received from a periphery in a signal processing device (200), the method comprising:

   analyzing a sound wave signal of an audible frequency band received by the signal processing device (200);
   determining whether there is a certain signal received together with a base signal for pre-set threshold time within the sound wave signal; and
   regarding the certain signal as a target signal if there is the certain signal, and generating a control signal for controlling the signal processing device (200) based on the target signal,
   wherein the base signal and the target signal are signals output from the signal output device (100) located at a periphery of the signal processing device (200) for the threshold time or longer, and
   wherein a frequency of the base signal and a frequency of the target signal are differently set within the audible frequency.

10. The method for processing a signal of claim 9, further comprising a step, in which if there is a signal received separately from the base signal or a signal received together with the base signal for a time period below the preset threshold time in the analyzed sound wave signal, the received signal is determined to be a peripheral noise signal, and the control signal is not generated.

11. The method for processing a signal of claim 9, wherein the analyzing step includes performing the Fast Fourier Transformation for the sound wave signal.

12. The method for processing a signal of claim 9, wherein each of the frequency of the base signal and the frequency of the target signal is set to a frequency of 18 KHz or higher within the audible frequency.

**Patentansprüche**

1. Vorrichtung (100) zum Ausgeben eines Signals zum Steuern einer anderen peripheren Zielvorrichtung (200), umfassend:

eine Zielsignalgenerierungseinheit (110), die dafür ausgelegt ist, ein Zielsignal zum Steuern der Zielvorrichtung (200) auf der Grundlage einer speziellen Frequenz, die innerhalb einer hörbaren Frequenz eingestellt ist, zu generieren;
eine Signalspeichereinheit (120), die dafür ausgelegt ist, ein Basissignal zu speichern, das eine Frequenz hat, die anders als die spezielle Frequenz innerhalb der hörbaren Frequenz eingestellt ist; und
eine Signalausgabeeinheit (130), die dafür ausgelegt ist, das Zielsignal und das Basissignal zusammen während einer voreingestellten Schwellenzeit oder länger auszugeben.

2. Vorrichtung (100) zum Ausgeben eines Signals nach Anspruch 1, wobei jede der speziellen Frequenz und der Frequenz des Basissignals auf eine Frequenz von 18 KHz oder höher innerhalb der hörbaren Frequenz eingestellt ist.

3. Vorrichtung (100) zum Ausgeben eines Signals nach Anspruch 1, wobei die Zielsignalgenerierungseinheit (110) dafür ausgelegt ist, die spezielle Frequenz in Abhängigkeit von einem durch einen Nutzer empfangen Eingangssignal zu ändern und das Zielsignal zu generieren.

4. Vorrichtung (100) zum Ausgeben eines Signals nach Anspruch 1, wobei das Basissignal mindestens zwei Signale umfasst, die Frequenzen haben, die anders eingestellt sind als die spezielle Frequenz, und jede der Frequenzen der mindestens zwei Signale auf eine Frequenz von 18 KHz oder höher innerhalb der hörbaren Frequenz eingestellt ist.

5. Vorrichtung (100) zum Ausgeben eines Signals nach Anspruch 4, wobei die Frequenzen der mindestens zwei Signale und die spezielle Frequenz eine Differenz von 600 Hz oder höher haben.

6. Vorrichtung (100) zum Ausgeben eines Signals nach Anspruch 1, wobei die Signalausgabeeinheit (130) ein latenzarmes Audio umfasst und dafür ausgelegt ist, das Zielsignal und das Basissignal in einer Sinuswellenform entsprechend einer Abtastrate des latenzarmen Audios auszugeben.

7. Vorrichtung (200) zum Verarbeiten eines von einer Peripherie empfangenen Signals, wobei die Vorrichtung (200) Folgendes umfasst:

eine Signalempfangseinheit (210), die dafür ausgelegt ist, ein Schallwellensignal eines hörbaren Frequenzbandes zu empfangen;
eine Signalanalyseeinheit (220), die dafür ausgelegt ist, das Schallwellensignal zu analysieren und ein bestimmtes Signal, das zusammen mit einem Basissignal über eine voreingestellte Schwellenzeit innerhalb des Schallwellensignals empfangen wird, als ein Zielsignal anzusehen; und
eine Steuersignalgenerierungseinheit (230), die dafür ausgelegt ist, ein Steuersignal zum Steuern der entsprechenden Vorrichtung auf der Grundlage des Zielsignals zu generieren,
wobei das Basissignal und das Zielsignal Signale sind, die von einer Signalausgabevorrichtung (100) ausgegeben werden, die sich an einer Peripherie der entsprechenden Vorrichtung über die Schwellenzeit oder länger befinden, und
wobei eine Frequenz des Basissignals und eine Frequenz des Zielsignals innerhalb der hörbaren Frequenz unterschiedlich eingestellt sind.

8. Vorrichtung (200) zum Verarbeiten eines Signals, das von einer Peripherie nach Anspruch 7 empfangen wird, wobei jede der Frequenz des Basissignals und der Frequenz des Zielsignals auf eine Frequenz von 18 KHz oder höher innerhalb der hörbaren Frequenz eingestellt ist.

9. Verfahren zum Verarbeiten eines Signals, das von einer Peripherie in einer Signalverarbeitungsvorrichtung (200) empfangen wird, wobei das Verfahren Folgendes umfasst:

Analysieren eines Schallwellensignals eines hörbaren Frequenzbandes, das durch die Signalverarbeitungsvorrichtung (200) empfangen wird;
Bestimmen, ob es ein bestimmtes Signal gibt, das zusammen mit einem Basissignal über eine voreingestellte Schwellenzeit innerhalb des Schallwellensignals empfangen wird; und
Ansehen des bestimmten Signals als ein Zielsignal, falls es das bestimmte Signal gibt, und
Generieren eines Steuersignals zum Steuern der Signalverarbeitungsvorrichtung (200) auf der Grundlage des Zielsignals,
wobei das Basissignal und das Zielsignal Signale sind, die von der Signalausgabevorrichtung (100) ausgegeben werden, die sich an einer Peripherie der Signalverarbeitungsvorrichtung (200) über die Schwellenzeit oder länger befindet, und
wobei eine Frequenz des Basissignals und eine Frequenz des Zielsignals innerhalb der hörbaren Frequenz unterschiedlich eingestellt sind.

10. Verfahren zum Verarbeiten eines Signals nach Anspruch 9, das des Weiteren einen Schritt umfasst, in dem, falls es ein Signal gibt, das separat von dem Basissignal empfangen wird, oder ein Signal, das zusammen mit dem Basissignal über einen Zeitraum unterhalb der voreingestellten Schwellenzeit in dem analysierten Schallwellensignal empfangen wird, bestimmt wird, dass das empfangene Signal ein peripheres Rauschsignal ist, und das Steuersignal nicht generiert wird.

11. Verfahren zum Verarbeiten eines Signals nach Anspruch 9, wobei der Analysierschritt das Ausführen der Schnellen Fourier-Transformation für das Schallwellensignal umfasst.

12. Verfahren zum Verarbeiten eines Signals nach Anspruch 9, wobei jede der Frequenz des Basissignals und der Frequenz des Zielsignals auf eine Frequenz von 18 KHz oder höher innerhalb der hörbaren Frequenz eingestellt ist.

**Revendications**

1. Dispositif (100) pour délivrer un signal pour commander un autre dispositif cible périphérique (200), comprenant :

une unité de génération de signal cible (110) qui est agencée pour générer un signal cible pour commander le dispositif cible (200) sur la base d'une fréquence spécifique réglée dans une fréquence audible ;
une unité de stockage de signal (120) qui est agencée pour stocker un signal de base ayant une fréquence réglée différemment de la fréquence spécifique dans la fréquence audible ; et
une unité de sortie de signal (130) qui est agencée pour délivrer ensemble le signal cible et le signal de base pendant un temps de seuil prédéfini ou plus long.

2. Dispositif (100) pour délivrer un signal selon la revendication 1,
dans lequel chacune de la fréquence spécifique et de la fréquence du signal de base est réglée sur une fréquence de 18 kHz ou plus dans la fréquence audible.

3. Dispositif (100) pour délivrer un signal selon la revendication 1,
dans lequel l'unité de génération de signal cible (110) est agencée pour changer la fréquence spécifique en fonction d'un signal d'entrée reçu par un utilisateur et pour générer le signal cible.

**4.** Dispositif (100) pour délivrer un signal selon la revendication 1,
dans lequel le signal de base comprend au moins deux signaux ayant des fréquences réglées différemment de la fréquence spécifique, et chacune des fréquences desdits au moins deux signaux est réglée sur une fréquence de 18 kHz ou plus dans la fréquence audible.

**5.** Dispositif (100) pour délivrer un signal selon la revendication 4,
dans lequel les fréquences desdits au moins deux signaux et la fréquence spécifique ont une différence de 600 Hz ou plus.

**6.** Dispositif (100) pour délivrer un signal selon la revendication 1,
dans lequel l'unité de sortie de signal (130) comprend un audio à faible latence, et est agencée pour délivrer le signal cible et le signal de base sous forme d'onde sinusoïdale en fonction d'une fréquence d'échantillonnage de l'audio à faible latence.

**7.** Dispositif (200) pour traiter un signal reçu à partir d'une périphérie, le dispositif (200) comprenant :

une unité de réception de signal (210) agencée pour recevoir un signal d'onde sonore d'une bande de fréquence audible ;
une unité d'analyse de signal (220) qui est agencée pour analyser le signal d'onde sonore, et pour considérer un certain signal reçu conjointement avec un signal de base pendant un temps de seuil prédéfini dans le signal d'onde sonore en tant que signal cible ; et
une unité de génération de signal de commande (230) qui est agencée pour générer un signal de commande pour commander le dispositif correspondant sur la base du signal cible,
dans lequel le signal de base et le signal cible sont des signaux délivrés par un dispositif de sortie de signal (100) situé au niveau d'une périphérie du dispositif correspondant pendant le temps seuil ou plus longtemps, et dans lequel une fréquence du signal de base et une fréquence du signal cible sont réglées différemment dans la fréquence audible.

**8.** Dispositif (200) pour traiter un signal reçu à partir d'une périphérie selon la revendication 7, dans lequel chacune de la fréquence du signal de base et de la fréquence du signal cible sont réglées sur une fréquence de 18 kHz ou plus dans la fréquence audible.

**9.** Procédé pour traiter un signal reçu à partir d'une périphérie dans un dispositif de traitement de signal (200), le procédé comprenant de :

analyser un signal d'onde sonore d'une bande de fréquence audible reçu par le dispositif de traitement de signal (200) ;
déterminer s'il existe un certain signal reçu conjointement avec un signal de base pendant un temps de seuil prédéfini dans le signal d'onde sonore ; et
considérer le certain signal en tant que signal cible si le certain signal est présent, et générer un signal de commande pour commander le dispositif de traitement de signal (200) sur la base du signal cible,
dans lequel le signal de base et le signal cible sont des signaux délivrés par le dispositif de sortie de signal (100) situé au niveau d'une périphérie du dispositif de traitement de signal (200) pendant le temps seuil ou plus longtemps, et
dans lequel une fréquence du signal de base et une fréquence du signal cible sont réglées différemment dans la fréquence audible.

**10.** Procédé de traitement d'un signal selon la revendication 9, comprenant en outre une étape dans laquelle, s'il y a un signal reçu séparément du signal de base ou un signal reçu conjointement avec le signal de base pendant une période de temps inférieure au temps de seuil prédéfini dans le signal d'onde sonore analysé, le signal reçu est déterminé comme étant un signal de bruit périphérique, et le signal de commande n'est pas généré.

**11.** Procédé de traitement d'un signal selon la revendication 9, dans lequel l'étape d'analyse comprend d'exécuter la transformation rapide de Fourier pour le signal d'onde sonore.

**12.** Procédé de traitement d'un signal selon la revendication 9, dans lequel chacune de la fréquence du signal de base et de la fréquence du signal cible est réglée sur une fréquence de 18 kHz ou plus dans la fréquence audible.

## FIG. 1

## FIG. 2

*FIG. 3*

# FIG. 4

```
         ( Start )
             |
             v
+--------------------------------+
| Analyzing the sound wave signal of |  ~ S110
|   the audible frequency band       |
+--------------------------------+
             |
             v
          S120
      /           \
     /   Is there   \     NO
    < a base signal within the sound >------>
     \   wave signal?  /
      \           /
          |
         YES
          |
          v
          S130
      /           \
     /   Is there   \
    < a certain signal received >     NO
    < together with the base signal for >------>
     < pre-set threshold  /
      \    time?    /
          |
         YES
          |
          v
+--------------------------------+
| Determining the certain signal to be |  ~ S140
|        a target signal             |
+--------------------------------+
             |
             v
+--------------------------------+
| Generating a control signal based on |  ~ S150
|        the target signal           |
+--------------------------------+
             |
             v
        ( Finish )
```

# FIG. 5

$i \leftarrow 0$;
While(receive $A_t$) Do
    $F_t \leftarrow \text{FFT}(A_t)$;
    If ( $F_t$ has the base signals and Low-latency frequency ) Then
        $i \leftarrow i + 1$;
        If ( $i$ is more than threshold $\alpha$ ) Then
            **Control function execute**;
            Break;
        END If
    ELSE
        $i \leftarrow 0$;
    END IF
END WHILE

FIG. 6A

EP 3 021 596 B1

*FIG. 6B*

EP 3 021 596 B1

*FIG. 7*

EP 3 021 596 B1

FIG. 8

# FIG. 9

EP 3 021 596 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010030838 A1
- WO 2013030672 A2
- US 2005219068 A1
- KR 20080042512

**Non-patent literature cited in the description**

- **CHIU-CHIAO CHUNG.** research on a method for controlling Bluetooth-based smart devices and power consumption. *2011 Second International Conference on Innovations in Bio-inspired Computing and Applications,* 16 December 2011

- **SOUVIK MAITI.** interoperation using the Bluetooth and Wi-Fi technologies together by using OSGi. *2011 Second International Conference on Emerging Applications of Information Technology,* 19 February 2011
- **PASCAL BIHLER.** SmartGuide - A smartphone museum guide with ultrasound control. *Procedia Computer Science,* 2011